# EUROPEAN PATENT APPLICATION

(11) **EP 4 485 727 A1**
(43) Date of publication of application: **01.01.2025**
(21) Application number: 24180905.2
(22) Date of filing: 07.06.2024
(51) Int. Cl.: H02H 3/24, H02H 3/00

(54) **AUTOMOTIVE MULTI-VOLTAGE ELECTRONIC SYSTEM FOR UNDERVOLTAGE PROTECTION**

(30) Priority: 07.06.2023 PT 2023118713
(71) Applicant: Stra, SA, 3030-199 Coimbra (PT)
(72) Inventor: MARTINS RODRIGUES, HUMBERTO JORGE, 3100-541 Pombal (PT)
(74) Representative: Patentree

(57) **Abstract**

The present disclosure relates to an automotive multi-voltage electronic system for undervoltage protection. The disclosed multi-voltage electronic system comprises at least one switched-mode power supply unit, comprising at least one electrical input and one output port for connecting to the at least one load, and at least one input protection circuit; wherein the input protection circuit comprises at least one voltage detector and at least one memory cell where the toggle status is stored; wherein the at least one input protection circuit is configured to disconnect the at least one electrical output port from the at least one electrical input port, when an undervoltage is detected by the voltage detector determining that the at least one electrical input port has a voltage below an undervoltage threshold voltage; wherein the at least one input protection circuit is configured to toggle the undervoltage threshold voltage between a first minimum threshold and a second minimum threshold whenever the input voltage is below or above a switching voltage.

## Description

### TECHNICAL FIELD

The present disclosure relates to an automotive multi-voltage electronic system for undervoltage protection.

### BACKGROUND

Automotive electrical systems are usually powered up by a 12 Volt DC or 24 Volt DC battery systems, where a 24 Volt system uses essentially two 12 Volt batteries connected in series. An electronic equipment designed to be connected and powered by one of such vehicles, may be designed and prepared for only one of the said voltages, which is usually named as a single voltage, or may be designed as a dual voltage universal equipment.

On the first instalments, with a single voltage, the power supply circuitry is designed specifically for a limited voltage range and cannot be used in other voltage range, either 12 Volt DC, where the voltage range will be in the vicinity of 10 to 15 Volt DC, or 24 Volt DC version, where the voltage range will be in the 20 to 30 Volts DC window.

In the second instalment, with a dual voltage, a power supply unit is designed with wider range of acceptable supply voltages, and normal operation is ensured to a wider range of input voltages, namely from 10 Volt DC up to 30 Volt DC.

In this way, a single unit of electronic equipment may be employed in different target systems, despite the power source available in that particular environment.

In some designs, to ensure correct operation, prior to power up, the input voltage shall be selected, thus requiring a user to correctly identify the power source and manually modify the equipment to receive the identified power source. Mistakes in selecting or updating the power source selection result in the equipment either not working properly or in failure and damage to the said equipment.

In the universal power supply configuration, where the power supply is ready and will operate normally in a wider range of supply voltages a common problem arises, leading to the eventual over discharge of the batteries where energy is sourced from. The under-voltage and over discharge protection will not operate on a 24 Volt system, simply because the cut-out voltage must be below the minimum functioning voltage of a 12 Volt system. This is a severe problem for the users, due to the device not being able to protect 24 Volt systems against battery over discharge, by maintaining normal operation, even if the batteries experience deep discharge even below voltages causing permanent damage to said batteries.

An existing solution to this problem is the manual configuration of each device for the respecting voltage of the system where it would be installed. The drawbacks of this solution are mainly three. The first being a manual operation is error prone, secondly manual labour increases the time required for each installation. The third drawback is that a device once installed, if needed to install in a different system, may require a new configuration, thus increasing the effort and risk of the operation.

Other solution depends on factory configuration and preparation of the normal operating voltages according to the architecture of the target, leading to several hardware configurations and a complicated stock management. Being the most robust solution, this one is not a practical or cost effective one, once there are readily available power supply units and SMPS integrated circuits that operate at acceptable levels of efficiency at a very wide range of input voltages, for example 6 to 40 VDC.

In document US8350519 B2 it is disclosed a battery or capacitor over voltage (overcharge) and under-voltage protection circuit, that, for example, is adapted to not draw current from the battery or capacitor to be charged unless charge energy is detected and to not charge an energy storage device when an over-charge condition is sensed. The protection circuit may, for example, not be turned on unless an overvoltage condition is present. Incoming energy to the system can be shunted to ground via a shunt load of various types including resistive loads and active components such as a zener diode. In some embodiments, no switching of the inbound power is required. Within limits, no regulation of inbound power is needed. When inbound power is sufficient to charge the battery or capacitor, regulation can occur via the applied shunt regulator if overcharge voltage conditions exist. Either type of charge source, voltage or current, can be used to provide charge energy. Combining said battery or capacitor over voltage (overcharge) and under-voltage protection circuit with electronic loads, such as wireless sensors, may lead to autonomously-powered wireless sensor systems.

In document US11336085 B2 discloses an under-voltage lockout circuit includes an automatic under-voltage lockout threshold configuration. The under-voltage lockout circuit may include an over-voltage protection circuit that receives power from a power source, a peak detector that detects a peak voltage output for the power source, a voltage threshold generator that sets a under-voltage lockout threshold based on the peak voltage output, and a comparator that compares an instantaneous voltage with the under-voltage lockout threshold and configures an operating mode of a device based on the comparison.

### GENERAL DESCRIPTION

The present disclosure relates to an automotive multi-voltage electronic system for undervoltage protection.

The main technical problem with the multi-voltage electronic systems for undervoltage protection of the prior art is that in the universal power supply configuration, where the power supply is ready and will operate normally in a wider range of supply voltages, a common problem arises, leading to the eventual over discharge of the batteries where energy is sourced from, as above mentioned. This is a severe problem for users, due to a device not being able to protect a specific voltage system against battery over discharge, by maintaining normal operation, even if the batteries experience deep discharge even below voltages causing permanent damage to said batteries, independently of the vehicle voltage in multi-voltage applications.

To solve this problem, the current technology proposes a solution to automatically identify the voltage level of the feeder supplying system, and according to that voltage, define acceptable operation thresholds and avoid battery depletion below a certain minimum voltage level defined according to said systems' voltage.

The presently described technology comprises a multi-voltage electronic system for undervoltage protection, for battery powered devices, such as an automotive vehicle. The minimum voltage is automatically selected according to power supply voltage, and severe discharge is avoided by an undervoltage protection system even in universal voltage devices. Also, this technology allows the reduction of associated costs of equipment production, storage, and distribution by reducing equipment variants. Lastly, this technology also avoids individual configuration of supply voltages, and its inherent complexity and risk due to manual action required.

The technical solution hereby disclosed assumes, as an illustrative example, the usage of a supply for voltage conversion between input voltage and device operation voltages (output) as a load for the disclosed system. This technical solution can have embodiments applied to any kind of load, either in buck converter (DC-DC converter) mode or boost converter mode. In a possible embodiment, this load can operate in 5 Volt mode or preferably 3.3 Volt, or any other suitable voltage level. Any other embodiment of energy consumer shall be included in this technology, may it be a linear voltage regulator, resistive load, like a lamp, or an inductive load, like a DC or BLDC motor and corresponding controller, used in a fan or an automotive refrigerator.

Along this disclosure and in a specific embodiment, it is considered that the load can be a switch mode power supply, which is a type of power supply that uses semiconductor switching techniques, rather than standard linear methods to provide the required output voltage. These power supplies are typically more susceptible to undervoltage situations.

Although this disclosure only states two different voltage levels, for simplicity purposes, the same technology can be used for more voltage levels if required, by adding consecutive voltage detectors and increasing the number of memory cells, ensuring at least one bit changing for each voltage range to be selected and protected and adding combinatory electronics to the power supply enable input.

This system is different from the prior art at least because the operation voltage configuration is automatic, not requiring a technical supervision and therefore safe for non-technical installation. The present approach allows the production of a single device to be used in light duty or heavy-duty vehicles, without requiring distinctive designs of the power supply, reducing complexity and production overheads. Typically, light duty vehicles use 12 V batteries and heavy duty vehicles use 24 V batteries. Thus, a device able to be used in both kinds of vehicles should handle different voltage profiles automatically. The stock management can also be highly improved by stocking only one variant instead of two variants or more of electronic equipment according to the installation constraints.

The advantages in respect of the prior art include, as stated, reduced cost for production, reduced risk of misconfiguration due to manual actions and increased simplification of equipment stocking and supply chain by reducing hardware variants.

The present disclosure relates to an automotive multi-voltage electronic system for undervoltage protection of at least one load, for example a switched-mode power supply unit, the system comprising at least one electrical input port, at least one electrical output port for connecting to the at least one load, and at least one input protection circuit; wherein the at least one input protection circuit comprises at least one voltage detector and at least one memory cell; wherein the at least one input protection circuit is configured to disconnect the at least one electrical output port from the at least one electrical input port, when an undervoltage is detected by the at least one voltage detector determining that the at least one electrical input port having a voltage below an undervoltage threshold voltage; wherein the at least one input protection circuit is configured to toggle the undervoltage threshold voltage (V1, V2) between at least a first minimum threshold (V1) and a second minimum threshold (V2) whenever the input voltage is below or above a switching voltage (Vsw); wherein the at least one input protection circuit is configured to store the toggle status in the memory cell.

In an embodiment, the switching voltage of the multi voltage electronic under voltage protection system is ranging from 15 to 20 Volt, preferably from 16 to 18 Volt and more preferably 17.5 Volt.

In an embodiment, the switched-mode power supply of the multi voltage electronic under voltage protection of the disclosed system operates in 3.3 - 5 V, preferably 3.3 V.

In an embodiment, the multi voltage electronic under voltage protection system further comprises a resistive load, a capacitive load or an inductive load.

In an embodiment, the at least one electrical input port of the multi voltage electronic under voltage protection system is a connector or a plug.

In an embodiment, the at least one input protection circuit of the multi voltage electronic under voltage protection system comprises at least one fuse or a resettable fuse.

In an embodiment, the multi voltage electronic under voltage protection system further comprises at least one filtering component.

The present disclosure relates also to a battery powered device comprising the multi voltage electronic under voltage protection system.

In an embodiment, the battery powered device is a computer, a quantum computer, an electric power transmission, an electric motor, a car, a truck, a tractor, a light duty vehicle, a heavy-duty vehicle, an airplane, a caravan, a trailer, a boat, a drone and/or a space vehicle.

The present disclosure also discloses an automotive multi-voltage electronic operation method for undervoltage protection of at least one switched-mode power supply unit, comprising the steps of: a first monitoring (I') of an input voltage of an electrical input port; detecting if the monitored input voltage is lower than a predetermined switching voltage (Vsw); configuring an undervoltage threshold voltage (V1, V2) for a first minimum threshold (V1) or a second minimum threshold (V2), whether the detected input voltage is below or above a switching voltage (Vsw), respectively; a second monitoring (II, IV) of the input voltage of the electrical input port; detecting if the monitored input voltage is lower than configured undervoltage threshold voltage (V1, V2) then determining that undervoltage is detected and carrying out a shut-down (III, V) of an electrical output port feeding said switched-mode power supply unit.

In an embodiment, the method comprises an intermediate step, after determining that undervoltage is detected and before disconnecting the electrical output port, of: detecting if the monitored input voltage is lower than a minimum operation threshold voltage (Vmin) then determining that power down is detected and restarting the method.

In an embodiment, the method further comprising: if, otherwise, the monitored input voltage is higher than configured undervoltage threshold voltage (V1, V2), then activating the electrical output port feeding said switched-mode power supply unit; if the undervoltage threshold voltage (V1, V2) is configured for a first minimum threshold (V1), proceeding to the first monitoring (I') of the input voltage; if the undervoltage threshold voltage (V1, V2) is configured for a second minimum threshold (V2), proceeding to the second monitoring (IV) of the input voltage.

In an embodiment, the method comprises storing the configured undervoltage threshold voltage (V1, V2) in a memory cell.

The disclosed methods may be carried out by an electronic circuit or by a computer.

### BRIEF DESCRIPTION OF THE DRAWINGS

The following figures provide preferred embodiments for illustrating the disclosure and should not be seen as limiting the scope of invention.
Figure 1: Schematic representation of a simplified architecture of a power supply unit input.
Figure 2: Graphic representation along the time of the input voltage variation and operation areas.
Figure 3: Schematic representation of a state machine with the multi voltage electronic under voltage protection system.
Figure 4: Schematic representation of an electronic scheme of the voltage detector and memory cell.

### DETAILED DESCRIPTION

This disclosure relates to an automotive multi-voltage electronic system for undervoltage protection.

The present disclosure relates to an automotive multi-voltage electronic system for undervoltage protection of at least one switched-mode power supply unit, comprising at least one electrical input port, at least one electrical output port for connecting to the at least one load, and at least one input protection circuit; wherein the at least one input protection circuit comprises at least one voltage detector and at least one memory cell; wherein the at least one input protection circuit is configured to disconnect the at least one electrical output port from the at least one electrical input port, when an undervoltage is detected by the at least one voltage detector determining that the at least one electrical input port having a voltage below an undervoltage threshold voltage; wherein the at least one input protection circuit is configured to toggle the undervoltage threshold voltage (V1, V2) between a first minimum threshold (V1) and a second minimum threshold (V2) whenever the input voltage is below or above a switching voltage; wherein the at least one input protection circuit is configured to store the toggle status in the memory cell.

In an embodiment, the presently described technology is embodied as an additional functional block in the input stage of a power supply (4). A similar element to the now proposed technology may seem to be present in some power supply designs of the prior art, usually called as "Under voltage lockout systems", but its behaviour is different, in the aspect that the voltage threshold is constant, single and defined during design phase. The purpose of this multi voltage electronic under voltage protection system is to identify the nominal voltage present at the power supply and configure an adjustable "undervoltage lock out" (UVLO). In this specific context, two different voltage levels "V1" and "V2", shall be identified, whereas, in an embodiment, "V1" may be relative to a 12 Volt system and "V2" relative to a 24 Volt system. The specification of these two voltage levels seek only to facilitate the explanation of the system, once at other specific embodiment, any other voltage levels, or array of batteries, not indicated herein may be used. Knowing there are two different voltage levels at which the power supply may need to be shut down, the adjustable under voltage protection system will monitor the input voltage supplied to the whole system and configure accordingly the under-voltage protection setting. An important functionality of this under voltage protection system is that it contains a memory cell, used to retain the voltage configuration even in cases where the input voltage drops below the higher under-voltage threshold voltage, "V2" or even under the lower undervoltage threshold voltage, "V1" the system shall not activate the power supply unit, even if the input voltage is inside the normal "V1" range, after being set to the "V2" voltage range. Direct consequence of vehicles remaining without operating for prolonged periods of time, it is expectable that the system voltage may fall deeply below normal voltage in 24 Volt systems, with the voltage of a discharged battery even going down to 12 Volt levels. The proposed system will only reactivate the power supply unit once the input voltage reaches "V2" minimum level disregarding if it raises below or above "V1" voltage level.

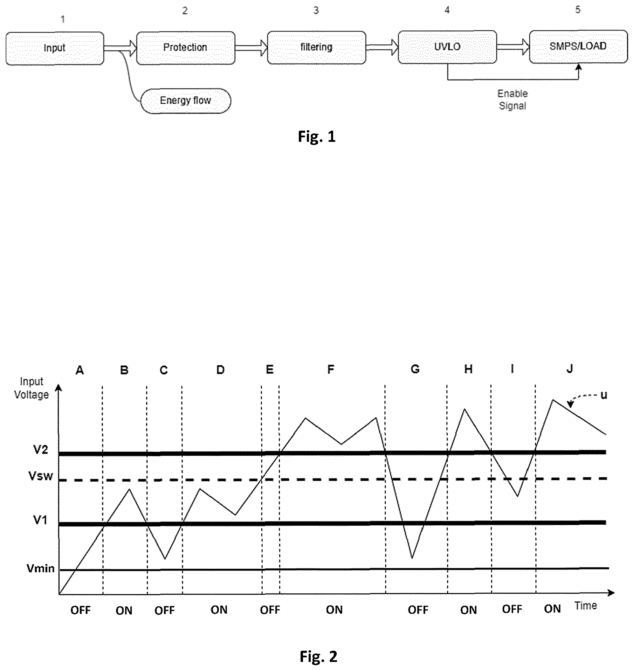

As illustrated in Figure 1, the simplified architecture of the power supply unit input comprises at least one electrical input port, which in different embodiments can be a connector, a plug, or any other suitable means of electrical interconnection. The energy will then flow to the input protection circuit, which can comprise at least one fuse, a resettable fuse or any other suitable electronic circuit. The energy will then flow, in some embodiments through at least one filtering component, and pass for the under-voltage protection system, enabling a signal for the electronic switch mode power supply with a linear voltage regulator and other active or passive loads.

As illustrated in Figure 2, the graphic representation of an input voltage variation and operation areas of a device comprising a multi voltage electronic under voltage protection system where the vertical axis represents the voltage supply, and the horizontal axis represents the time. The variation of the input voltage "u" entails different status identified by vertical windows indicated in the figure from "A" to "J". So, firstly, the input voltage is below the first minimum threshold (V1), so that the state of operation of the power supply unit is OFF (A). When the input voltage is above the first minimum threshold (V1), the state of operation passes to ON (B) and when the input voltage is again below the first minimum threshold (V1), the state of operation is again OFF (C). When the input voltage is above the first minimum threshold (V1), the state of operation is ON again (D), and when the input voltage transitions above the switching voltage, Vsw, the input voltage is configured as the second minimum threshold (V2). Once the input voltage is below the second minimum threshold (V2), the operation state is OFF again (E). When the input voltage is above the second minimum threshold (V2), the state of operation is ON (F) and when it passes below the second minimum threshold (V2), the state of operation is OFF (G). In this case, the system has already considered V2 as the second minimum threshold, and so above the second minimum threshold (V2), the state of operation is ON (H) and below the second minimum threshold (V2), the state of operation is OFF (I). When the input voltage is again above the second minimum threshold (V2), the state of operation is ON (J).

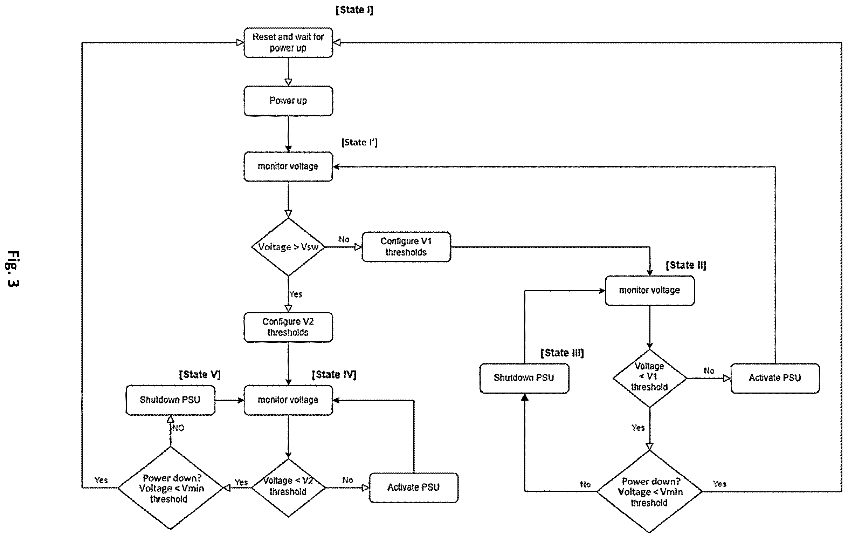

As illustrated in Figure 3, an embodiment of the state machine of the multi voltage electronic under voltage protection system, with a sequential operation that is represented for clarity purposes. The system can be on a State I, where it is unpowered, but as soon as it is powered up, at least one voltage detector will test whether the voltage is above the switching voltage (Vsw) threshold. If this is not the case, the system will configure the first minimum threshold (V1) and make a new monitoring voltage cycle (State II). If the voltage is not below this first minimum threshold (V1), the system will activate the power supply unit and monitor the voltage again. If the voltage is below the first minimum threshold (V1), then the system will analyse if it should power down. If a power cut is executed, then the system will be again in unpowered mode (State I). If it does not power down, the system will shutdown the power supply unit and so it will enter in shutdown state when the first minimum voltage reference is V1 and the input voltage is below the first minimum threshold (V1) but power is still applied (State III). In the case of a first power-up, the voltage is above the second minimum threshold (V2), the system will configure the second thresholds (V2) and repeat the monitoring voltage cycle (State IV). If the voltage is not below the second minimum threshold (V2), the system will activate the power supply unit (State IV). When the voltage is above the second minimum threshold (V2), the system will have to decide whether it will power down or keep up. If it powers down, the system will be back on unpowered mode (State I). If it decides to keep up, the system will shut down the power supply unit but power is still applied to the disclosed undervoltage protection system (State V).

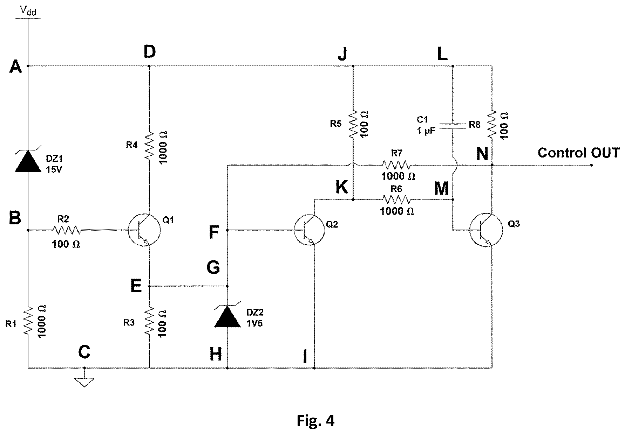

As illustrated in Figure 4, it is indicated a possible embodiment of the electronic scheme of a multi voltage electronic under voltage protection system, implemented with discrete components. The overall implementation is not critical as such may be implemented using other components, other configurations, an hybrid setup combining discrete and integrated circuits, using an integrated latch, and even being synthesized in an application specific integrated circuit. The suggested diagram reveals the usage of a DC voltage input rail (VDD), after protection and filtering by the input stages of a power supply. R1 and R2 are polarizing resistors for Q1, being Q1 a negative-positive-negative bipolar junction transistor, its function, when polarized by DZ1 will drain current through R4 creating a voltage at the node "E" which in turn will polarize Q2. In an embodiment, a Zenner diode (DZ1) with a voltage of 15 Volt limits the minimum voltage at which the circuit will toggle from V1 to V2, and assuming the polarizing resistors R1 and R2 with the values in the schematic, the switching voltage is 17.5 Volt, meaning the circuit will toggle from V1 limits to V2 limits when the input voltage rises above 17.5 Volt. R4 is a current limiting resistor protecting Q1 collector. DZ2 purpose is to limit the voltage rise at Q2 base in order to protect it against overvoltage and possible destruction, the Zener voltage needs to be adjusted to the transistors used and the values in this schematic are used for reference only. Q2 and Q3 form an SR Latch, being the memory cell of the circuit. During power up, Q3 will have its base polarized momentarily by C1, resetting the latch and ensuring a reset state at power up. After power up, and once the base voltage of Q2 rises above the minimum polarisation level, the Q2 transistor starts conducting, removing the base voltage of Q3 which enters a high impedance state between its collector and emitter. After this moment the node "N" reached the VDD voltage of the input activating the control output to the V2 levels configuration. R5, R6, R7 and R8 are polarizing and current limiting resistors for the latch setup. Control out connection may be used directly as an enable input of a SMPS IC or adjusted according to the SMPS IC configuration. According to the usage and remaining power supply circuitry, this output may be tailored to the power supply requirements using passive or active components, according to specification.

The practical application for this technology is to protect the batteries of automotive vehicles from deep discharge by maintaining the power supply of electronic equipment active, after the point when the battery voltage is diminished, achieving a reduced amount of energy storage. Under such circumstances, even a reduced discharge rate is sufficient to completely deplete the battery, leading to premature wear and ageing of that same battery. This technology being integrated to an electronic device, brings that device compatible with 12 Volt and 24 Volt batteries protecting them from over discharge. A 12 Volt or a 24 Volt system is commonly identified as light duty and heavy-duty usage vehicle, nevertheless, the invention is not limited to this embodiment, other voltage sources (6V, 12V, 24V, 36V, 48V) and target systems may be used, like caravans, trailers, boats, etc.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. An automotive multi-voltage electronic system for undervoltage protection of at least one load, comprising at least one electrical input port, at least one electrical output port for connecting to the at least one load, and at least one input protection circuit;
wherein the at least one input protection circuit comprises at least one voltage detector and at least one memory cell;
wherein the at least one input protection circuit is configured to disconnect the at least one electrical output port from the at least one electrical input port, when an undervoltage is detected by the at least one voltage detector determining that the at least one electrical input port having a voltage below an undervoltage threshold voltage;
wherein the at least one input protection circuit is configured to toggle the undervoltage threshold voltage (V1, V2) between at least a first minimum threshold (V1) and a second minimum threshold (V2) whether the input voltage is below or above a switching voltage (Vsw), respectively;
wherein the at least one input protection circuit is configured to store the toggle status in the memory cell.

2. The automotive multi-voltage electronic system according to the previous claim, wherein the switching voltage (Vsw) is ranging from 15 to 20 Volt, preferably from 16 to 18 Volt and more preferably 17.5 Volt.

3. The automotive multi-voltage electronic system according to any of the previous claims, wherein the load is switched-mode power supply, in particular a switched-mode power supply operating in 3.3-5 V, preferably 3.3 V.

4. The automotive multi-voltage electronic system according to any of the previous claims, further comprising a resistive load, a capacitive load or an inductive load.

5. The automotive multi-voltage electronic system according to any of the previous claims, wherein the at least one electrical input port is a connector or a plug.

6. The automotive multi-voltage electronic system according to any of the previous claims, wherein the at least one input protection circuit comprises at least one fuse or a resettable fuse.

7. The automotive multi-voltage electronic system according to any of the previous claims, further comprising at least one filtering component.

8. A battery powered device comprising the automotive multi-voltage electronic system described in any of the previous claims.

9. The battery powered device according to the previous claim, wherein the battery powered device is a computer, a quantum computer, an electric power transmission, an electric motor, a car, a truck, a tractor, a light duty vehicle, a heavy-duty vehicle, an airplane, a caravan, a trailer, a boat, a drone and/or a space vehicle.

10. An automotive multi-voltage electronic operation method for undervoltage protection of at least one load, comprising the steps of:
a first monitoring (I') of an input voltage of an electrical input port;
detecting if the monitored input voltage is lower than a predetermined switching voltage (Vsw);
configuring an undervoltage threshold voltage (V1, V2) for a first minimum threshold (V1) or a second minimum threshold (V2), whether the detected input voltage is below or above a switching voltage (Vsw), respectively;
a second monitoring (II, IV) of the input voltage of the electrical input port;
detecting if the monitored input voltage is lower than configured undervoltage threshold voltage (V1, V2) then determining that undervoltage is detected and carrying out a shut-down (III, V) of an electrical output port feeding said load.

11. The method according to the previous claim further comprising an intermediate step, after determining that undervoltage is detected and before disconnecting the electrical output port, of
detecting if the monitored input voltage is lower than a minimum operation threshold voltage (Vmin) then determining that power down is detected and restarting the method.

12. The method according to claim 10 or 11 further comprising:
If, otherwise, the monitored input voltage is higher than configured undervoltage threshold voltage (V1, V2), then activating the electrical output port feeding said load;
if the undervoltage threshold voltage (V1, V2) is configured for a first minimum threshold (V1), proceeding to the first monitoring (I') of the input voltage;
if the undervoltage threshold voltage (V1, V2) is configured for a second minimum threshold (V2), proceeding to the second monitoring (IV) of the input voltage.

13. The method according to any of the claims 10-12 comprising storing the configured undervoltage threshold voltage (V1, V2) in a memory cell.

14. The method according to any of the claims 10-13 wherein the load is a switched-mode power supply unit.

15. Computer-implemented method according to the method of any of the claims 10-14, comprising carrying out the method steps by a computer.
